# EUROPEAN PATENT SPECIFICATION

(11) **EP 1 889 738 B1**
(45) Date of publication and mention of the grant of the patent: **31.03.2010**
(21) Application number: 07016031.2
(22) Date of filing: 15.08.2007
(51) Int. Cl.: B60H 1/00

(54) **Air control device for heating and/or airconditioning system for vehicles**
Luftsteuerungsvorrichtung zur Erwärmung und/oder Klimaanlage für Fahrzeuge
Dispositif de contrôle d'air pour système de climatiseur et de chauffage de véhicules

(30) Priority: 15.08.2006 US 504100
(43) Date of publication of application: 20.02.2008
(73) Proprietor: Behr America, Inc, Troy, Michigan 48083 (US)
(72) Inventor: Braun, Willi, Lake Orion, MI 48359 (US)
(74) Representative: Grauel, Andreas

(56) References cited:
- EP-A- 1 364 819
- DE-A1- 4 422 537
- DE-A1- 19 620 749
- DE-A1- 19 652 523
- DE-A1- 19 730 479
- US-A- 5 645 479
- US-A1- 2002 000 307

## Description

The present invention relates generally to the field of heating and air-conditioning systems that are suitable for use in motor vehicles, and more particularly to an improved design of an air flow control member and to heating and air-conditioning systems that employ the improved air flow control member.

An example of such an air control arrangement can be found in DE 186 52 523 A1, upon which the preamble of appending claim 1 is based.

Because auto manufacturers produce a wide variety of vehicle models that employ in most cases uniquely designed heating and/or air-conditioning systems for each vehicle model, the control system employed for controlling the individual air control members, e.g., flaps, may use mechanical linkage (kinematic) actuators, or direct actuators, such as stepper motors, or in a single heating or air-conditioning system a combination of both types of control mechanism may be used. As can be imagined, this leads to the need to design a very large number of unique control members, both in the sense that two separate models are needed for each control member configuration, a first one for kinematic actuation and a second one for direct actuation, and in the sense that every air control system employs a number of uniquely configured air control members, i.e., the shape of the flap itself.

It would be advantageous to provide a way to decrease the large number of unique air control member configurations and designs that are needed to supply all of the various heating and air-conditioning systems that vehicle manufacturers employ in their different models.

It is one object of the present invention to provide an improved air control member design that enables universal connection to any desired type of actuation device, such as a kinematic actuator or a direct actuator, such as a stepper motor.

Another object of the present invention is to provide an improved air control arrangement for use in a heating and/or air-conditioning system, preferably in a motor vehicle, in which the improved air control member is embodied.

It is also an object of the invention to provide an improved heating and/or air-conditioning system, especially for use in a motor vehicle.

Yet another object of the invention resides in the provision of an improved motor vehicle embodying the air control arrangement according to the invention.

In accordance with the present invention, there is provided an air control arrangement according to claim 1.

In accordance with another aspect of the present invention, there is provided an automotive heating and/or air-conditioning system according to claim 10.

According to yet another aspect of the present invention, there is provided a motor vehicle according to claim 12.

Further objects, features and advantages of the present invention will become apparent from the detailed description of preferred embodiments that follows, when considered together with the accompanying figures of drawing.

In the drawings:

FIG. 1 is a schematic illustration showing an arrangement according to the invention for regulating air mixing in a heating or air-conditioning system;

FIG. 2 is a perspective view showing one embodiment of a shaft portion of an air control member according to the present invention;

FIG. 3 is a plan view showing the shaft portion of FIG. 2 connected to a kinematic actuator;

FIG. 4 is a perspective view showing additional structure of the kinematic actuator of FIG. 3;

FIG. 5 is a plan view showing the shaft portion of FIG 2. connected to a motor actuator;

FIG. 6 is a perspective view showing the motor actuator connected to the shaft portion according to FIG. 5;

FIG. 7 is a plan view showing one typical embodiment of a flap type air control member having a shaft portion according to the invention;

FIG. 8 is a perspective view showing one possible embodiment of an air flow control system for a heating and/or air-conditioning system of the type used in a motor vehicle;

FIG. 9 is a cross-sectional view showing the portion of the air control system of shown in FIG. 8 that is downstream of the condenser; and

FIG. 10 is a perspective cut-away view showing the portion of the air control system depicted in FIG. 9, with kinematic actuator members connected to the air control flaps.

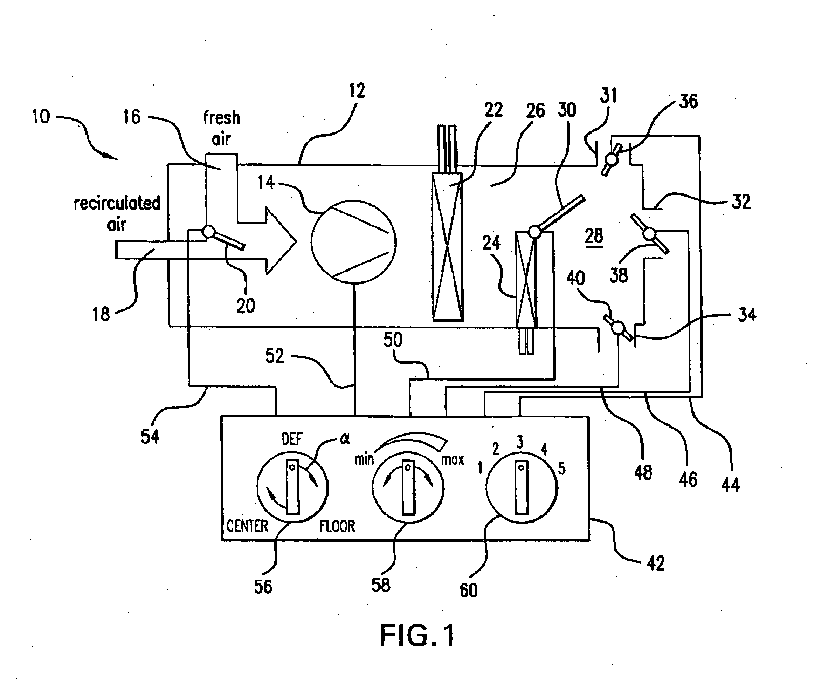

Referring to FIG. 1, one typical arrangement 10 is schematically shown of a system for regulating air mixing in a heating or air-conditioning system of a motor vehicle. There are many different designs for such systems, and the present invention is useful in virtually any such system. The schematically illustrated arrangement 10 has an air-guiding housing 12 of an air-conditioning unit. The air-guiding housing 12 contains a fan 14 to which fresh air can be supplied via a fresh-air opening 16 and/or recirculated-air can be supplied via a recirculated-air opening 18. An air-flow control element 20, for example, a fresh-air/recirculated-air flap, serves for regulating the proportion of fresh air to recirculated air, which proportion can be set in each case depending on the flap position. Instead of the fresh-air/recirculated-air flap 20, there could also be provided two individual air flaps which can respectively close the fresh-air opening 16 and the recirculated-air opening 18.

The air taken in by the fan 14 is guided in the air-guiding housing 12 through a cooling heat exchanger 22, for example, an evaporator, of a refrigerant circuit, and is cooled therein. A heating heat exchanger 24 in which the air can be heated is arranged on the downstream side of the cooling heat exchanger 22. A cold-air bypass 26 is provided parallel to the heating heat exchanger 24, and by means of this bypass cold air can be guided past the heating heat exchanger 24 into a cold-air/warm-air mixing chamber 28. The proportion of cold air to warm air, and therefore the air temperature in the air-mixing chamber 28, can be set via a temperature mixing flap 30.

As an alternative, instead of the air temperature regulation which is described, engine coolant (water) regulation could also be provided. In this case the air passes continuously through the heating heat exchanger, i.e., there is no cold-air bypass, and, in order to regulate the temperature, the water throughput through the heating heat exchanger can be regulated by an appropriate valve.

Several ducts branch off from the air-mixing chamber 28, including a defrosting-air duct 31, a ventilating duct 32 and a footwell air duct 34. These can be closed via the corresponding defrosting-air flap 36, ventilating flap 38 and footwell air flap 40. The air is guided via the air ducts 31, 32 and 34 to air nozzles arranged in the vehicle passenger compartment, such as defrosting nozzles, central vents and footwell vents, according to the usual practice and in accordance with the design of individual vehicle models. Systems are well known for either providing conditioned air to two zones of the passenger compartment (front right and front left) or to four zones (front right, front left, rear right and rear left).

All of the flaps of the air-conditioning unit and the fan 14 can be controlled via a control unit 42 and can be connected to the latter via signal lines and/or mechanical connectors 44, 46, 48, 50, 52 and 54. In a typical embodiment, the control unit 42 has, for example, three operating elements 56, 58 and 60, which are preferably arranged in the dashboard and with which specific instructions can be set. In the exemplary embodiment illustrated, the operating element 56 is designed as an air-distributing switch or flap switch, the operating element 58 is designed as a temperature selection switch, and the operating element 60 is designed as a fan output switch.

The control unit 42 preferably contains a microcomputer for activating the individual air flaps and the fan in accordance with the settings on the operating elements 56, 58, 60. The air flaps themselves can be adjusted via stepping motors and/or by means of mechanical linkage (kinematic) control elements, both of which are conventional. For example, one mode of kinematic operation is disclosed in U.S. Patent No. 5,645,479.

As discussed above, because auto manufacturers produce a wide variety of uniquely designed heating and/or air-conditioning systems for the multitude of vehicle models they produce, there is a need to design and produce a very large number of unique control members, both in the sense that two separate models are needed for each control member configuration (one for kinematic actuation and a second one for direct actuation), and in the sense that every air control system employs a number of uniquely configured air control members, i.e., the shape of the flap itself.

According to the present invention, one feature that greatly simplifies the design and construction of air control systems for heating and air-conditioning systems resides in providing the shaft portion of the air control members with a universal connection configuration. In other words, the end of the axis shaft is configured so that it can interact with a plurality of different actuation devices, such as both a kinematic actuator as well as, alternatively, a direct actuator, which is typically a stepper motor. In carrying out this feature, a large number of different design possibilities exist. This feature is characterized by at least two different mechanical configurations, wherein each configuration is capable of interacting with a different type of actuation device. Typically, the two configurations are mutually exclusive, and preferably, the two configurations are chosen to correspond with existing connection configurations, where possible, of standard actuation devices.

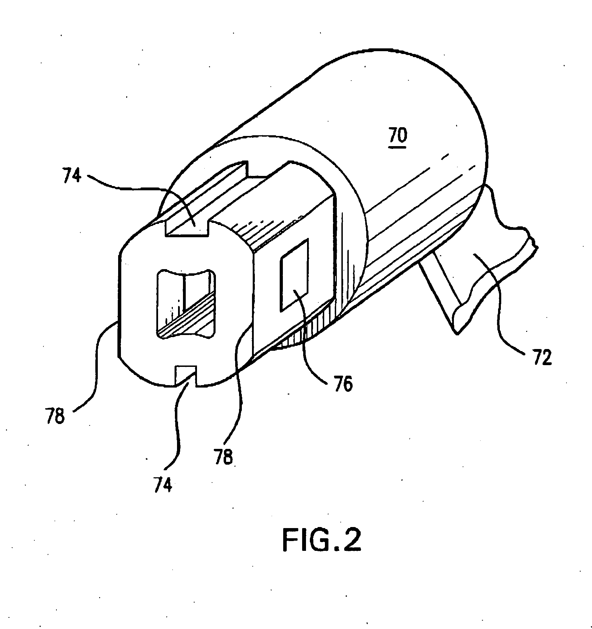

FIG. 2 is a perspective view showing one preferred configuration for the air flow control member shaft end according to the invention. On at least one end of shaft 70, to which air control flap 72 is attached in order to rotate around the axis of shaft 70, a specially configured end portion is provided that is capable of interacting with at least two different types of actuation device. In order to inter-engage with a first type of actuation device, for example, a mechanical or kinematic actuator, the end of shaft 70 is provided with two keyed portions, shown as slots 74. Preferably, to assist in the correct orientation of the actuator at the time of installation, the slots 74 are of different configuration, in this case different width. The end of shaft 70 is preferably also provided with a mechanism for attaching or retaining a kinematic actuator that cooperates with the shaft. In this case, one preferred embodiment is shown in the form of at least one and preferably two locking windows or recesses 76. Obviously, many other configurations for the shaft end as well as for the retaining mechanism are possible.

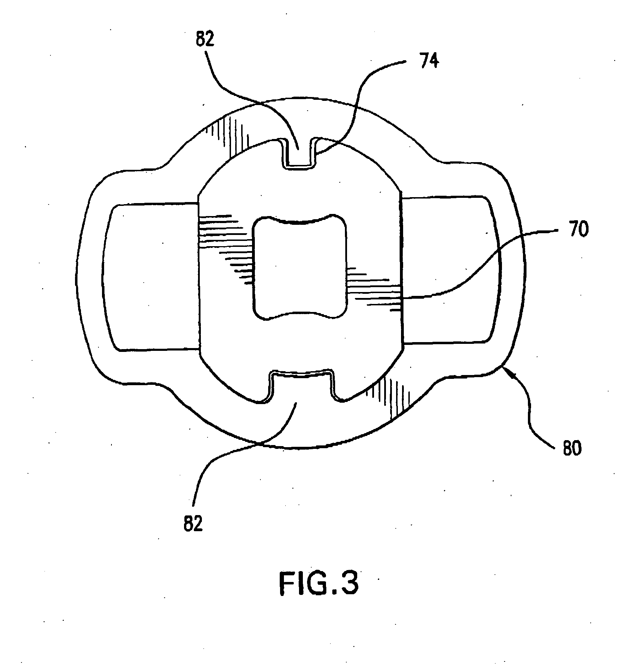

FIG. 3 illustrates the cooperation and inter-engagement of the first configuration of the end of shaft 70 with a kinematic actuation device 80. The kinematic actuator 80 has two assembly keys 82 that inter-engage in the keyed slots 74. Because the slots 74 are of different configuration and the assembly keys 84 are of matching configuration, the kinematic actuator can be applied to the shaft end in only a single orientation, which aids in the assembly operation.

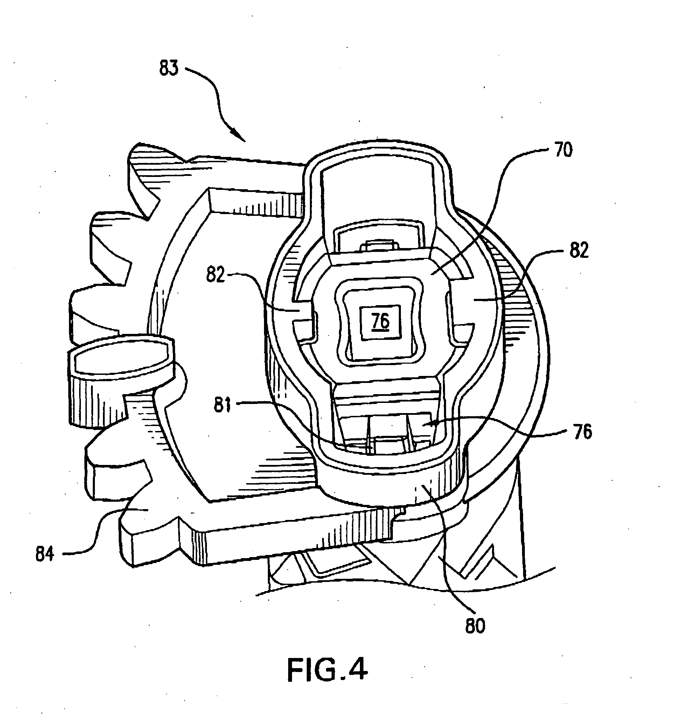

A typical kinematic actuation device is more completely illustrated in FIG. 4. Actuator 80 has a keyed frame portion having the profile seen in FIG. 3, to which is attached a geared section 83 that carries a plurality of gear teeth 84. This typical kinematic actuator is shown for illustration only, inasmuch as a wide variety of different kinematic actuation assemblies are possible, with many being well known. FIG. 4 also shows one example of a latching mechanism 81 on the kinematic actuator 80 that engages with the locking window or recess 76, in order to retain the actuator on the shaft end after it is mounted there. Preferably, there are two latching mechanisms 81, one on either side, that engage with opposing locking windows or recesses 76.

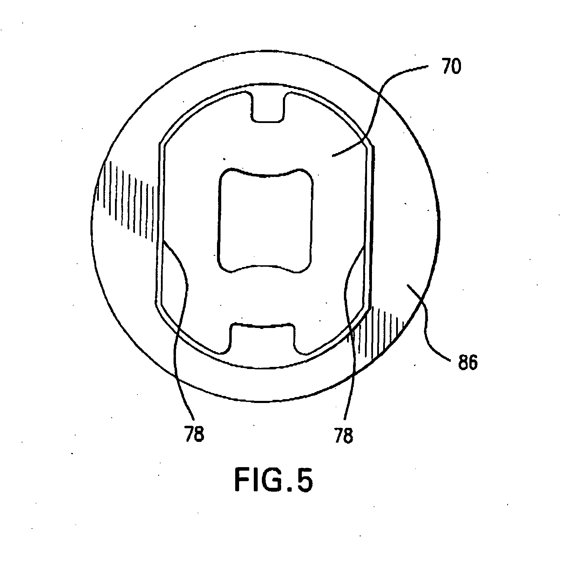

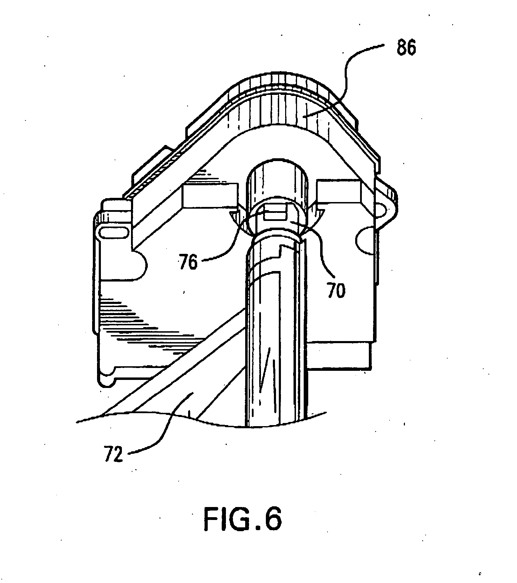

FIGS. 5 and 6 illustrate the second inter-engagement configuration that is formed on the end of shaft 70 in the illustrated embodiment. In this embodiment, the outer shaft configuration 78 is designed for inter-engagement with a second type of actuation device, in this case a direct actuator 86, such as a stepper motor. The opposing sides 78 of shaft 70 have been flattened in this embodiment, to form a so-called Double D shape, which can interlock and be driven by the direct actuator 86. FIG. 6 shows more completely the assemblage of shaft 70 carrying flap 72 and the stepper motor 86 mounted on the end of shaft 70. The second inter-engagement configuration provides mutually exclusive structural features vis-à-vis the first inter-engagement configuration.

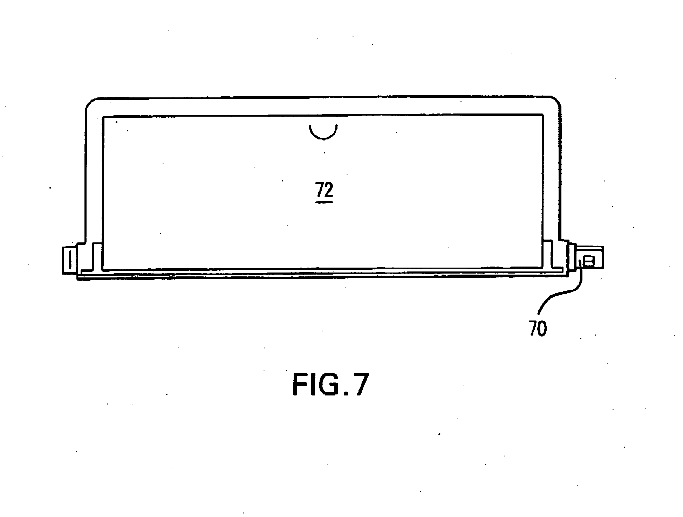

According to a further aspect of the invention, the design and assembly of air control devices for heating and/or air-conditioning systems can be simplified even further by providing an air control element of standard shape and size that embodies the multi-functional attaching configuration of the air control element shaft. An air control device that is designed to employ only a single standardized air control element in multiple locations, preferably in each location, where needed in the device will require far fewer different parts to be supplied for its assembly. Further, by designing multiple heating and/or air-conditioning systems to employ the standardized air control element, an auto manufacturer can significantly decrease the number of different parts that need to be purchased and supplied. Obviously, great latitude exists for the shape and size of such a standardized air control member. FIG. 7 illustrates one such preferred shape for air flap 72, in this case a rectilinear shape, i.e., a rectangle as illustrated here. Other figures illustrate that different shapes, such as a square shape can also be used with advantage.

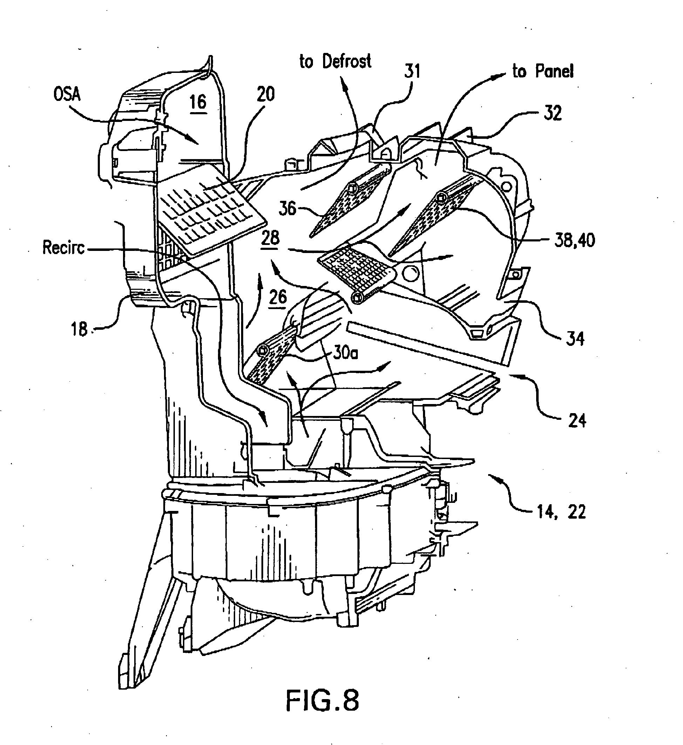

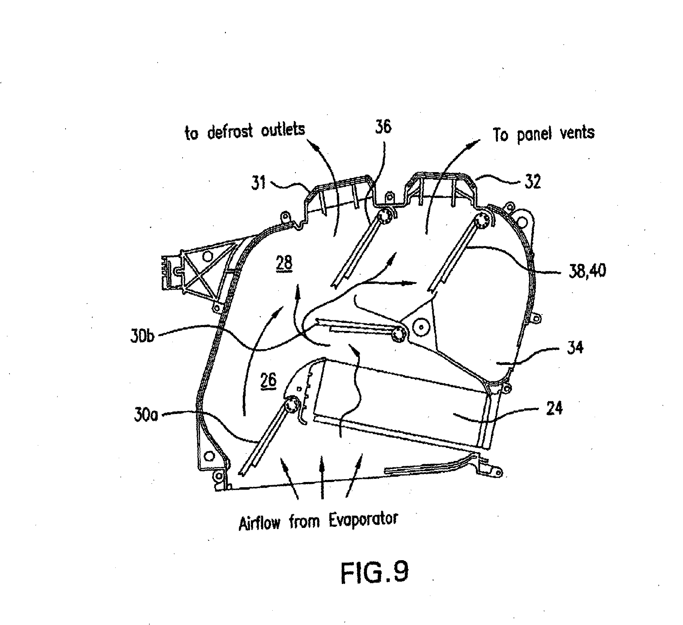

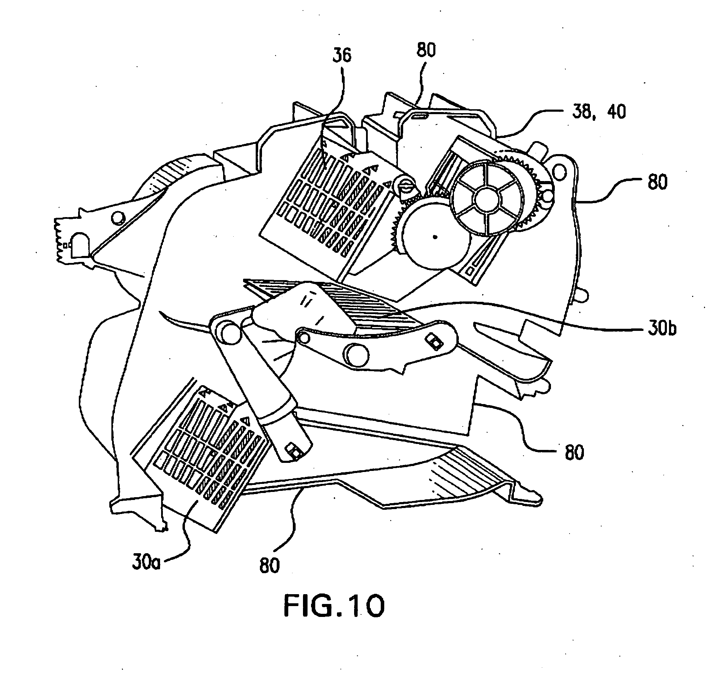

One exemplary preferred heating and air-conditioning system embodying the air control member according to the invention is illustrated in FIGS. 8-10. This system is generally representative of the type of system schematically illustrated in FIG. 1, and the same reference numerals have been used in FIGS. 8-10 as those used in FIG. 1. The entire system is depicted in FIG. 8, wherein a single air control member (flap) 20 serves to select and adjust the mixture of fresh outside air OSA and recirculated air Recirc. After passing through a fan 14 and condenser 22, shown generally, the conditioned air is fed upwardly either through heater 24 or through bypass passage 26, where the amount of bypass air is controlled by flap 30a. As seen more clearly in FIG. 9 (which shows only the portion downstream of the condenser), the amount of bypass air is controlled by two separate flaps 30a and 30b, which, for example, can be kinematically connected together, as shown in FIG. 10. air passing through heater 24 and bypass passage 26 are combined in air mixing chamber 28. Air flap 36 controls both the amount of air that is permitted to pass to the defrost outlet through defrost duct 31 as well as the amount of air that is permitted to pass to the panel vents through ventilating duct(s) 32 and/or to the footwells via footwell air duct 34. In this regard, a fourth air flap 38/40 serves the dual purposes of determining the respective amount of air flowing to the ventilating ducts 32 and the footwell air duct 34. In other words, in this embodiment, a single air flap performs the function of two flaps 38 and 40 in the schematic illustration of FIG. 1. This again illustrates that the improved air control device according to the invention can be used with advantage in virtually any heating and/or air-conditioning system. In this embodiment, the air flaps 36 and 38/40 are also advantageously kinematically connected together, as shown in FIG. 10.

The foregoing description of preferred embodiments of the invention has been presented for purposes of illustration and description only, It is not intended to be exhaustive or to limit the invention to the precise form disclosed, and modifications and variations are possible and/or would be apparent in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto and that the claims encompass all embodiments of the invention, including the disclosed embodiments and their equivalents. For example, it is apparent that benefit will be gained by employing at least some of the air control members according to the invention in any particular heating or air-conditioning system, without employing the air control members of this invention in each location where an air control member is present.

## Claims

1. An air control arrangement (10) for use in a heating and/or air conditioning system, comprising:
an air handling housing (12) that defines at least one air flow passageway and comprises at least a heater (24) for heating air flowing through the air flow passageway; at least one air flow control member (20, 30, 36, 38, 40, 72) located in the air flow passageway for controlling the flow of air; and an actuation device (80, 86) connected to the at least one air flow control member for selectively actuating the at least one air flow control member (20, 30, 36, 38, 40, 72), wherein said at least one air flow control member comprises a portion capable of selectively blocking the flow of air in an air passageway, a shaft (70) member connected to the selective air blocking portion and having an axis about which the selective air blocking portion rotates, and a portion located at at least one end of the shaft (70) that comprises a mechanism for inter-engaging with an actuating device for rotation of the shaft member;
wherein said mechanism comprises said shaft end having at least first and second different mechanical configurations (74, 76,78), wherein each configuration is capable of selectively interacting with a first or a second different type of actuation device (80, 86), **characterized in that**,
the air handling housing (12) comprises a plurality of said air control members (20, 30, 36, 38, 40, 72) wherein at least a plurality of said air control members have a common size and shape, so as to be interchangeable with one another.

2. An air control arrangement according to claim 1, wherein said first type of actuation device comprises a kinematic actuator (80), and said second type of actuation device comprises a direct actuator (86).

3. An air control arrangement according to any of the preceding claims, wherein the second type of actuation device (86) comprises a stepper motor.

4. An air control arrangement according to any of the preceding claims, wherein the first and second configurations are mutually exclusive.

5. An air control arrangement according to any of the preceding claims, wherein at least one of the first and second configurations corresponds with an existing connection configuration of standard actuation device.

6. An air control arrangement according to any of the preceding claims, wherein the first configuration comprises at least one keyway (74) formed in the shaft end.

7. An air control arrangement according to any of the preceding claims, wherein the second configuration comprises a torque transmitting outer shape of the shaft end that includes at least one flat circumferential surface (78).

8. An air control arrangement according to any of the preceding claims, wherein the second configuration comprises two flat circumferential surfaces (78) on opposing sides of the shaft.

9. An air control arrangement according to any of the preceding claims, wherein the air handing housing (12) further comprises an evaporator (22) in the air flow passageway.

10. An automotive heating and/or air-conditioning system, comprising an air control arrangement (10) as defined by any of the claims 1 through 9.

11. An automotive heating and/or air-conditioning system according to claim 10, wherein all of said air control members (20, 30, 36, 38, 40, 72) have a common size and shape, so as to be interchangeable with one another.

12. A motor vehicle, comprising a heating and/or air-conditioning system as defined in claims 10.

## Patentansprüche

1. Luftsteuerungsanordnung (10) für Einsatz in einer Heiz- und/oder Klimaanlage, umfassend:
ein Luftführungsgehäuse (12), das mindestens einen Luftströmungskanal definiert und mindestens ein Heizgerät (24) zum Erwärmen der durch den Luftströmungskanal strömenden Luft aufweist; mindestens ein im Luftströmungskanal angeordnetes Luftsteuerelement (20, 30, 36, 38, 40, 72) zum Steuern des Luftstroms; und eine mit dem mindestens einen Luftsteuerelement verbundene Betätigungseinrichtung (80, 86) zur selektiven Betätigung des mindestens einen Luftsteuerelements (20, 30, 36, 38, 40, 72), wobei das besagte mindestens eine Luftsteuerelement einen zum selektiven Blockieren des Luftstroms in einem Luftkanal dienenden Abschnitt, ein mit dem selektiven Blockierabschnitt verbundenes Wellenelement (70) mit einer Achse, um die sich der selektive Blockierabschnitt dreht, und einen an wenigstens einem Ende der Welle (70) angeordneten Abschnitt aufweist, der einen Mechanismus zum Ineinandergreifen mit einer Betätigungseinrichtung zur Drehung des Wellenelements umfasst;
wobei der besagte Mechanismus das besagte Wellenende mit mindestens ersten und zweiten unterschiedlichen mechanischen Konfigurationen (74, 76, 78) umfasst, die jeweils selektiv mit einer ersten oder zweiten unterschiedlichen Ausführung der Betätigungseinrichtung (80, 86) in Wechselwirkung sein können, **dadurch gekennzeichnet, dass**
das Luftführungsgehäuse (12) eine Vielzahl der besagten Luftsteuerelemente (20, 30, 36, 38, 40, 72) aufweist, wobei mindestens eine Mehrheit der besagten Luftsteuerelemente eine gemeinsame Größe und Form hat, so dass sie gegeneinander austauschbar sind.

2. Luftsteuerungsanordnung nach Anspruch 1, wobei die besagte erste Ausführung der Betätigungseinrichtung einen kinematischen Aktor (80) und die besagte zweite Ausführung der Betätigungseinrichtung einen direkten Aktor (86) aufweist.

3. Luftsteuerungsanordnung nach einem der vorhergehenden Ansprüche, wobei die zweite Ausführung der Betätigungseinrichtung (86) einen Schrittmotor aufweist.

4. Luftsteuerungsanordnung nach einem der vorhergehenden Ansprüche, wobei die ersten und zweiten Konfigurationen einander ausschließen.

5. Luftsteuerungsanordnung nach einem der vorhergehenden Ansprüche, wobei mindestens eine der ersten und zweiten Konfigurationen einer vorhandenen Anschlusskonfiguration einer üblichen Betätigungseinrichtung entspricht.

6. Luftsteuerungsanordnung nach einem der vorhergehenden Ansprüche, wobei die erste Konfiguration mindestens eine im Wellenende ausgebildete Keilnut (74) aufweist.

7. Luftsteuerungsanordnung nach einem der vorhergehenden Ansprüche, wobei die zweite Konfiguration am Wellenende eine Drehmoment übertragende Außenform aufweist, die mindestens eine ebene Umfangsfläche (78) umfasst.

8. Luftsteuerungsanordnung nach einem der vorhergehenden Ansprüche, wobei die zweite Konfiguration zwei ebene Umfangsflächen (78) auf einander gegenüber liegenden Seiten der Welle aufweist.

9. Luftsteuerungsanoränung nach einem der vorhergehenden Ansprüche, wobei das Luftfahrungsgehäuse (12) weiter einen Verdampfer (22) im Luftströmungskanal umfasst.

10. Heiz- und/oder Klimaanlage für Kraftfahrzeuge mit einer Luftsteuerungsanordnung (19) nach einem der Ansprüche 1 bis 9.

11. Heiz- und/oder Klimaanlage für Kraftfahrzeuge nach Anspruch 10, wobei alle der besagten Luftsteuerelemente (20, 30, 36, 38, 40, 72) eine gemeinsame Größe und Form haben, so dass sie gegeneinander austauschbar sind.

12. Kraftfahrzeug mit einer Heiz- und/oder Klimaanlage nach Anspruch 10.

## Revendications

1. Dispositif de régulation d'air (10) pour une utilisation dans un système de chauffage et / ou de climatisation comprenant :
un carter de guidage d'air (12) qui définit au moins un passage d'écoulement d'air et comprend au moins un radiateur (24) servant à chauffer l'écoulement d'air à travers le passage d'écoulement d'air ; au moins un élément de régulation (20, 30, 36, 38, 40, 72) d'écoulement de l'air placé dans le passage d'écoulement d'air et servant à réguler l'écoulement de l'air ; et un dispositif d'actionnement (80, 86) raccordé à l'élément de régulation d'écoulement de l'air, au moins au nombre de un, servant à actionner sélectivement l'élément de régulation (20, 30, 36, 38, 40, 72) d'écoulement de l'air, au moins au nombre de un, dans lequel ledit élément de régulation d'écoulement de l'air, au moins au nombre de un, comprend une partie pouvant bloquer sélectivement l'écoulement de l'air dans un passage d'air, un élément formant un arbre (70) raccordé à la partie bloquant sélectivement l'air et ayant un axe autour duquel tourne la partie bloquant sélectivement l'air, et une partie placée au niveau d'au moins une extrémité de l'arbre (70) qui comprend un mécanisme s'engrenant avec un dispositif d'actionnement prévu pour la rotation de l'élément formant l'arbre ;
dans lequel ledit mécanisme comprend ladite extrémité d'arbre comportant au moins les premières et deuxièmes configurations mécaniques différentes (74, 76, 78), dans lequel chaque configuration peut interagir de manière sélective avec un premier ou un deuxième dispositif d'actionnement (80, 86) de type différent,
**caractérisé en ce que** le carter de guidage d'air (12) comprend une pluralité desdits éléments de régulation d'air (20, 30, 36, 38, 40, 72), dans lequel au moins plusieurs desdits éléments de régulation d'air ont une taille et une forme communes, de manière à être interchangeables les uns avec les autres.

2. Dispositif de régulation d'air selon la revendication 1, dans lequel ledit premier type de dispositif d'actionnement comprend un actionneur cinématique (80), et ledit deuxième type de dispositif d'actionnement comprend un actionneur direct (86).

3. Dispositif de régulation d'air selon l'une ou l'autre des revendications précédentes, dans lequel le deuxième type de dispositif d'actionnement (86) comprend un moteur pas-à-pas.

4. Dispositif de régulation d'air selon l'une quelconque des revendications précédentes, dans lequel les premières et deuxièmes configurations sont exclusives les unes des autres.

5. Dispositif de régulation d'air selon l'une quelconque des revendications précédentes, dans lequel au moins l'une des premières et deuxièmes configurations correspond à une configuration de connexion existante d'un dispositif d'actionnement de type normal.

6. Dispositif de régulation d'air selon l'une quelconque des revendications précédentes, dans lequel la première configuration comprend au moins une rainure de clavette (74) formée dans l'extrémité de l'arbre.

7. Dispositif de régulation d'air selon l'une quelconque des revendications précédentes, dans lequel la deuxième configuration comprend un couple transmettant une forme extérieure de l'extrémité de l'arbre qui comprend au moins une surface (78) circonférentielle plate.

8. Dispositif de régulation d'air selon l'une quelconque des revendications précédentes, dans lequel la deuxième configuration comprend deux surfaces (78) circonférentielles plates sur des côtés opposés de l'arbre.

9. Dispositif de régulation d'air selon l'une quelconque des revendications précédentes, dans lequel le carter de guidage d'air (12) comprend en outre un évaporateur (22) dans le passage d'écoulement de l'air.

10. Système de chauffage et / ou de climatisation pour un véhicule automobile, comprenant un dispositif de régulation d'air (10) comme défini par l'une quelconque des revendications 1 à 9.

11. Système de chauffage et / ou de climatisation pour un véhicule automobile selon la revendication 10, dans lequel lesdits éléments de régulation d'air (20, 30, 36, 38, 40, 72), dans leur totalité, ont une taille et une forme communes, de manière à être interchangeables les uns avec les autres.

12. Véhicule automobile comprenant un système de chauffage et / ou de climatisation comme défini dans la revendication 10.
